**Europäisches Patentamt**

**European Patent Office**

**Office européen des brevets**

(19)

(11) Numéro de publication : **0 334 704 B1**

(12) **FASCICULE DE BREVET EUROPEEN**

(45) Date de publication du fascicule du brevet :
04.11.92 Bulletin 92/45

(51) Int. Cl.⁵ : **F16D 1/10, F16B 7/20**

(21) Numéro de dépôt : **89400636.0**

(22) Date de dépôt : **07.03.89**

(54) **Attache rapide du type à baionnette perfectionnée.**

(30) Priorité : **14.03.88 FR 8803290**

(43) Date de publication de la demande :
**27.09.89 Bulletin 89/39**

(45) Mention de la délivrance du brevet :
**04.11.92 Bulletin 92/45**

(84) Etats contractants désignés :
**BE DE ES GB IT NL SE**

(56) Documents cités :
**WO-A-82/02993**
**FR-A- 1 342 757**
**US-A- 2 060 523**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Hoblingre, André**
**28, Rue Vincent D'Indy**
**F-25700 Valentigney (FR)**

(74) Mandataire : **Habasque, Etienne Joel Jean-François et al**
**Cabinet Lavoix 2, Place d'Estienne d'Orves**
**F-75441 Paris Cédex 09 (FR)**

# Description

L'assemblage mécanique de deux pièces ou organes peut être obtenu de façon très diverses. L'un des moyens les plus simples et les moins encombrants est l'utilisation d'un accouplement de type baïonnette comportant sur l'un des organes un doigt en saillie et, à l'extrémité de l'autre, une douille ayant une fente hélicoïdale de réception et de blocage du doigt.

Une telle structure est décrite dans le document WO-A-8 202 993.

Les accouplements de ce type sont bien connus et utilisés dans de nombreux domaines. Ils sont cependant généralement réservés à la liaison d'organes destinés à rester stationnaires car ils peuvent difficilement assurer avec sécurité la transmission d'un couple, surtout si celui-ci est important.

Pour assurer des assemblages d'une sécurité totale, les moyens les plus couramment utilisés sont par exemple : des colliers, des systèmes vis écrou ou autres. Leurs inconvénients sont qu'ils exigent des manoeuvres précises et l'application d'efforts de serrage bien déterminés, engendrant des erreurs possibles à la mise en place.

La présente invention a pour but de remédier à ces inconvénients et de réaliser une attache rapide qui tout en présentant les avantages d'un accouplement de type baïonnette, assure une liaison, sans jeu ni axial ni angulaire, permettant, d'une part, la transmission de couples même importants et, d'autre part, l'établissement de la liaison par une manoeuvre unique et pouvant être démontée à tout moment.

Cette invention a en effet pour objet une attache rapide du type baïonnette, pour la liaison de deux organes dont l'un est terminé par une douille ayant au moins une fente hélicoïdale, tandis que l'autre comporte une queue portant au moins un doigt en saillie latérale, susceptible de se loger dans la fente de la douille, caractérisée en ce que la douille porte un organe de guidage et de verrouillage bloqué en rotation et mobile axialement et élastiquement relativement à celle-ci, pour repousser élastiquement le doigt dans le fond de la fente hélicoïdale et le verrouiller dans cette position.

Selon un mode de réalisation préféré l'organe de guidage et de verrouillage est constitué par une bague coulissant axialement le long de la douille mais repoussée vers l'extrémité ouverte de celle-ci par un ressort, cette bague comportant en regard de chacune des fentes hélicoïdales de la douille, une fente longitudinale ouverte, décalée latéralement par rapport à l'entrée de la fente hélicoïdale.

Grâce à cette disposition un simple effort axial sur l'un ou l'autre des organes à relier oblige chacun des doigts d'entraînement à repousser la bague coulissante pour pénêtrer dans la fente hélicoïdale puis, sous l'action combinée des bords des deux fentes, à effectuer le déplacement angulaire nécessaire à son blocage et au retour de la bague dans la position de verrouillage. Les deux organes sont alors assemblés de manière sûre et sans jeu angulaire et peuvent transmettre des couples dans un sens ou dans l'autre quelle que soit leur importance.

La description ci-dessous d'un mode de réalisation, donné à titre d'exemple non-limitatif et représenté aux dessins annexés, fera d'ailleurs ressortir les avantages et caractéristiques de l'invention. Sur ces dessins :

La figure 1 est une vue en pespective éclatée d'une attache rapide selon l'invention;

La figure 2 est une vue en élévation de l'attache rapide assemblée.

La figure 3 est une vue en élévation d'une variante de réalisation de l'attache rapide assemblée.

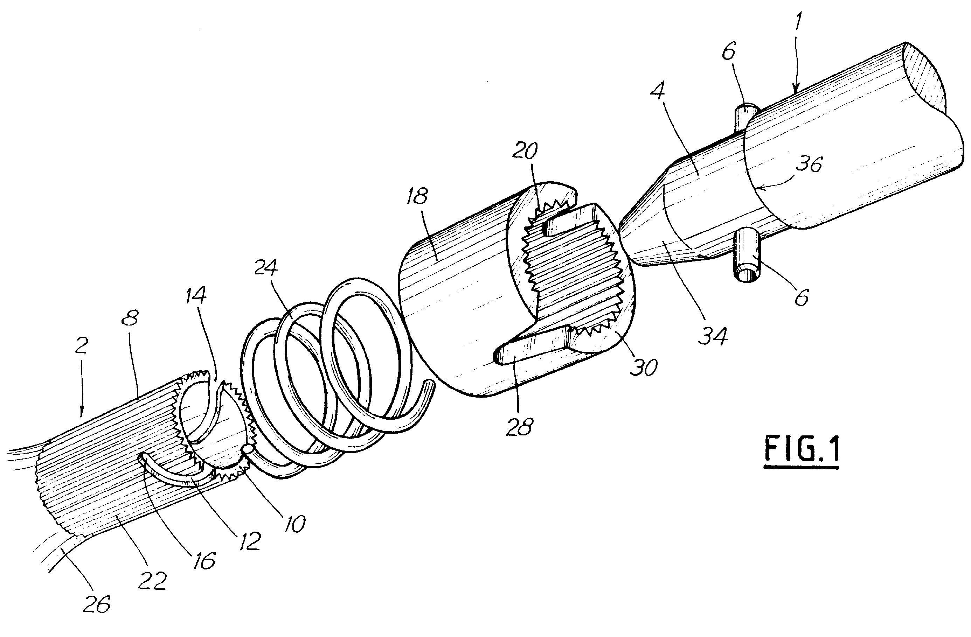

L'attache rapide selon l'invention est destinée à assurer la liaison de deux organes, et notamment de deux arbres coaxiaux, 1 et 2 dont l'un 1 comporte à son extrémité une queue allongée 4, de forme sensiblement cylindrique, qui porte au moins un doigt d'entraînement 6 et de préférence deux comme le montre la figure 1. L'organe 2 est lui terminé par une douille creuse, également cylindrique, 8 qui est ouverte à son extrémité d'entrée 10 et dans la paroi de laquelle sont ménagées deux fentes 12 susceptibles de recevoir chacune l'un des doigts 6.

Chacune des fentes 12 a une forme incurvée c'est-à-dire qu'elle comporte, après une entrée 14 sensiblement axiale, une portion 16 sensiblement hélicoïdale.

Sur la douille 8 est montée coulissante une bague 18 qui est rendue solidaire en rotation de la douille 8 par tout moyen approprié tel que des méplats, une forme polygonale ou, comme représenté, des cannelures longitudinales 20 ménagées sur sa surface interne et coopérant avec des cannelures complémentaires 22 de la surface extérieure de la douille 8. Un ressort hélicoïdal 24 est également monté autour de la douille 8. Il prend appui d'une part sur le bord de la bague coulissante 18 et d'autre part sur un épaulement externe ou saillie 26 de l'organe 2 de sorte qu'il tend à repousser la bague 18 vers l'extérieur c'est-à-dire en direction de l'extrémité ouverte 10 de la douille 8.

La bague 18 comporte également deux fentes 28 dirigées dans l'ensemble longitudinalement et ouvertes à l'extrémité de cette bague qui est éloignée du ressort 24. Chacune des fentes 28 a une largeur suffisante pour permettre la pénétration d'un doigt 6 de l'organe 1. De préférence ces fentes 28 ont une forme évasée, leur largeur s'accroissant progressivement en direction de leur extrémité ouverte (Fig. 1).

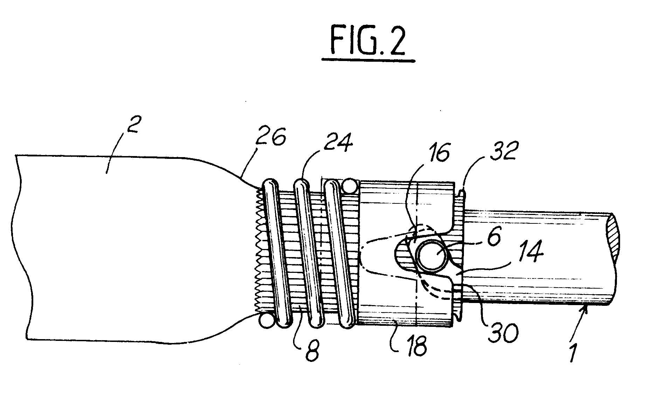

Comme le montre plus particulièrement la figure 2, chacune des fentes 28 est disposée au-dessus de l'une des fentes 12 de la douille 8, mais est décalée latéralement par rapport à l'entrée 14 de cette fente 12 de sorte que le bord extrême 30 de la bague 18 ferme partiellement cette entrée de la fente 12.

Un ou plusieurs ergots 32 formés par exemple par emboutissage ou par rabattement de la matière de la douille 8, après montage de la bague 18, assurent la retenue de cette bague sur la douille. Au repos, c'est-à-dire avant l'assemblage de l'attache rapide, la bague 18 est ainsi repoussée par le ressort 24 contre les ergots 32 dans une position angulaire bien déterminée.

Lorsque l'on veut établir la liaison entre les organes 1 et 2, il suffit d'introduire la queue allongée 4 à l'intérieur de la douille 8 en plaçant chacun des doigts 6 devant l'entrée 14 de l'une des fentes 12. Un effort axial sur l'un ou l'autre des organes 1 et 2 permet alors au doigt 6 de repousser le bord 30 de la bague 18 contre l'action du ressort 24 et ainsi de pénétrer dans la fente 12. En raison toutefois de l'effort exercé par le ressort 24 et de l'inclinaison du bord inférieur de la portion 16 de la fente 12, le doigt 6 est progressivement repoussé latéralement par le bord de la fente 28 de sorte qu'en même temps qu'il avance axialement dans la douille, il se déplace angulairement par rapport à l'entrée de la fente 12 et se rapproche du fond de cette dernière. Il glisse alors sur les bords opposés des deux fentes et permet ainsi à la bague 18 de reprendre progressivement sa position initiale. A ce moment comme le montre clairement la figure 2 le doigt 6 est emprisonné entre les bords des fentes 12 et 28, ce qui lui interdit tout retour en arrière.

De préférence un épaulement externe 36 est formé à la jonction entre l'organe 1 proprement dit et la queue 4 et l'arrivée en butée de cet épaulement contre le bord 10 de la douille 8 correspond à la position de verrouillage, ce qui facilite la mise en place de l'attache.

Les organes 1 et 2 sont alors étroitement verrouillés. Leur déplacement axial est interdit par le contact du doigt 6 avec les bords de la fente 12 tandis que leur déplacement relatif en rotation est interdit par le contact du doigt 6 avec les bords des deux fentes 12 et 28. Le blocage des organes 1 et 2 est sans jeu, les jeux, angulaires et/ou axiaux, étant automatiquement rattrapés par le ressort de compression quelles que soient les tolérances de fabrication et l'usure de l'ensemble.

Une telle liaison est obtenue par un simple effort axial, le déplacement angulaire s'effectuant automatiquement sous l'effet de la pression exercée. En outre, elle ne nécessite pas de manoeuvre précise car un léger décalage originel du doigt 6 par rapport à la fente 12 se corrige de lui-même par un déplacement angulaire relatif des deux organes tandis qu'un décalage plus important empêchant la liaison est immédiatement décelé, les deux organes restant indépendants. Ainsi le moindre couple exercé sur l'un des organes confirme le verrouillage ou signale son absence. La liaison est donc extrèmement sûre.

Cette liaison peut également être démontée très facilement en repoussant la bague 18 contre l'action du ressort 24 ce qui libère instantanément les doigts 6 et l'organe 1.

L'attache rapide est par suite tout particulièrement adaptée à la liaison d'organes difficilement accessibles ou même aux liaisons réalisées automatiquement ou commandées à distance, que les organes à relier soient pleins ou creux, la queue 4 pouvant éventuellement être creuse.

De préférence la mise en place de l'attache est facilitée par la présence à l'extrémité de la queue 4 d'une portion conique 34 facilitant le centrage et l'entrée dans la douille 8.

Bien entendu la queue 4 comme la surface interne de la douille 8 a de préférence une forme cylindrique à base circulaire mais peut avoir tout profil approprié. Elles peuvent notamment avoir des profils prismatiques complémentaires, ménageant entre eux un jeu suffisant pour permettre le verrouillage mais assurant un entraînement positif en cas de rupture du doigt d'entraînement. De même les doigts d'entraînement peuvent avoir une forme cylindrique à base circulaire comme représenté ou comporter des pentes appropriées correspondant aux appuis sur les bords des fentes de façon à augmenter les surfaces de contact.

Il apparaîtra clairement que le nombre de doigts d'entraînement, de fentes hélicoïdales et de fentes de verrouillage, peut varier selon les utilisations et l'importance des efforts à transmettre.

Dans certains cas, par ailleurs, il est avantageux d'utiliser comme ressort hélicoïdal 24 un ressort formé par une lame plate enroulée en hélice, au lieu d'un fil. Le ressort forme alors autour de la douille une gaine de protection contre les impuretés ou autres agressions extérieures.

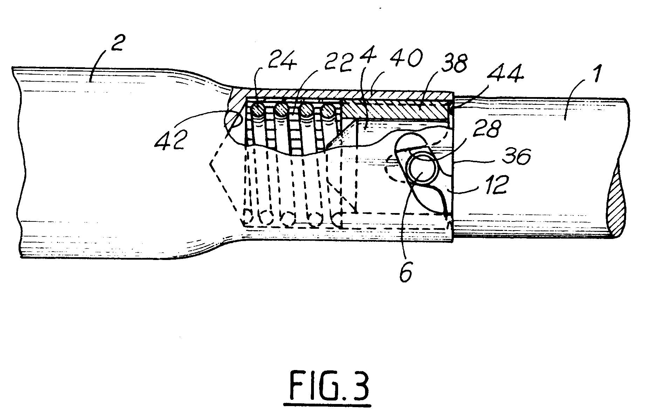

Une protection encore plus grande contre les impuretés peut être obtenue en réalisant l'attache selon la variante de réalisation représentée sur la figure 3. Dans ce cas en effet, la bague de guidage et de verrouillage 38 est montée coulissante à l'intérieur de la douille 40 de l'organe 2. Elle est rendue solidaire en rotation de cette douille par l'intermédiaire de cannelures 20, 22 ou par tout autre profil approprié. Un ressort 24 est également logé à l'intérieur de la douille entre le fond 42 de l'alésage interne de celle-ci et la bague 38. Des ergots radiaux 44, formés à l'extrémité ouverte de la douille 40, font saillie radialement à l'intérieur de celle-ci pour interdire la sortie de la bague 38.

La bague 38 comporte, comme la bague 18, des fentes longitudinales évasées 28 décalées latéralement par rapport à l'entrée 14 de chacune des fentes 12 de la douille 40.

La queue 4 de l'organe 1 a, dans ce cas, un profil et des dimensions complémentaires de ceux de la bague 38 dans laquelle elle doit pénêtrer.

L'assemblage s'effectue de la même manière qu'avec l'attache des figures 1 et 2. L'enfoncement de la queue 4 dans la bague 38 oblige les doigts 6 à repousser cette bague pour pénétrer dans les fentes 12 puis les bords des fentes 28 de la bague repoussent ces doigts 6 dans le fond de ces fentes 12 et les bloquent dans cette position.

Comme le montre la figure 3, tous les organes de l'attache sont alors protégés et isolés de l'extérieur par la douille qui est en butée contre l'épaulement 36 de l'organe 1. Ils ne peuvent être attaqués ni détériorés par des agressions extérieures.

## Revendications

1. Attache rapide de type baïonnette, pour la liaison de deux organes, comprenant ces deux organes, dont l'un est terminé par une douille (8;40) ayant au moins une fente hélicoïdale (12), tandis que l'autre comporte une queue (4) portant au moins un doigt (6) en saillie latérale, susceptible de se loger dans la fente de la douille, caractérisée en ce que la douille (8;40) porte un organe de guidage et de verrouillage (18;38) bloqué en rotation et mobile axialement et élastiquement relativement à celle-ci, pour repousser élastiquement le doigt (6) dans le fond de la fente hélicoïdale (12) et le verrouiller dans cette position.

2 - Attache rapide suivant la revendication 1, caractérisée en ce que l'organe de guidage et de verrouillage est constitué par une bague (18,38), coulissant axialement le long de la douille (8,40) et repoussée vers l'extrémité ouverte (10) de celle-ci par un ressort (24), qui comporte en regard de chaque fente hélicoïdale (12) une fente longitudinale ouverte (28) décalée latéralement par rapport à l'entrée de la fente hélicoïdale de sorte que le doigt (6) de la queue (4) doit la repousser pour pénétrer dans la fente (12) mais est ensuite emprisonné par les bords des deux fentes.

3 - Attache rapide suivant la revendication 2, caractérisée en ce que chaque fente longitudinale (28) de la bague coulissante est évasée en direction de son entrée.

4 - Attache rapide suivant l'une des revendications 2 et 3, caractérisée en ce que les bords de la fente (28) et de la bague coulissante (18,38) ferment partiellement l'entrée (14) de la fente (12) de la douille.

5 -Attache rapide suivant l'une des revendications précédentes, caractérisée en ce que la douille comporte, à proximité de son extrémité ouverte (10), des ergots radiaux (32) de retenue de la bague coulissante (18).

6 - Attache rapide suivant l'une des revendications précédentes, caractérisée en ce que l'organe de guidage et de verrouillage (18,38) est rendu solidaire en rotation de la douille (8,40) par des cannelures (20,22).

7 - Attache rapide suivant l'une des revendications précédentes, caractérisée en ce que l'organe de guidage et de verrouillage (18) est une bague montée coulissante sur la douille (8).

8 - Attache rapide suivant la revendication 7, caractérisée en ce que la bague (18) est repoussée vers l'extrémité ouverte de la douille (8) par un ressort (24) formé par une lame plate enroulée hélicoïdalement.

9 - Attache rapide suivant l'une des revendications 1 à 6, caractérisée en ce que l'organe de guidage et de verrouillage (38) est une bague montée coulissante à l'intérieur de la douille (40) et repoussée élastiquement vers l'extérieur.

## Patentansprüche

1. Schnellanschluß vom Typ der Bajonett-Kupplung zur Herstellung der Verbindung zweier Organe, wobei der Schnellanschluß diese beiden Organe umfaßt, von denen das eine in einer Hülse (8, 40) endet, die mindestens einen spiralförmigen Schlitz (12) besitzt, während das andere ein Endstück (4) aufweist, das mindestens einen seitlich vorspringenden Zapfen (6) trägt, der sich in den Schlitz der Hülse einfügen kann, dadurch gekennzeichnet, daß die Hülse (8, 40) ein Führungs- und Verriegelungsorgan (18, 38) trägt, daß gegen Drehen blockiert und axial sowie elastisch relativ zur Hülse beweglich ist, um den Zapfen (6) elastisch gegen den Boden des spiralförmigen Schlitzes (12) zurückzudrücken und in dieser Position zu verriegeln.

2. Schnellanschluß nach Anspruch 1, dadurch gekennzeichnet, daß das Führungs- und Verriegelungsorgan aus einem Ring (19, 38) besteht, der axial entlang der Hülse (8, 40) gleitet und gegen das offene Ende (10) der Hülse durch eine Feder (24) zurückgedrückt wird, die gegenüber jedem spiralförmigen Schlitz ( 12) einen offenen Längsschlitz (28) aufweist, der relativ zum Eingang des spiralförmigen Schlitzes seitlich versetzt ist, derart, daß der Zapfen (6) des Endstückes (4) den Ring zurückdrücken muß, um in den Schlitz (12) einzudringen, dann aber durch die Ränder der beiden Schlitze eingesperrt wird.

3. Schnellanschluß nach Anspruch 2, dadurch gekennzeichnet, daß jeder Längsschlitz (28) des gleitenden Ringes in Richtung seines Einganges trichterförmig ausgebildet ist.

4. Schnellanschluß nach einem der Ansprüche 2 und 3, dadurch gekennzeichnet, daß die Ränder des Schlitzes (28) und des gleitenden Ringes (18, 38) teilweise den Eingang (14) des Schlitzes (12) der Hülse sperren.

5. Schnellanschluß nach einem der vorhergehenden Ansprüche, dadurch gekennzeichnet, daß die Hülse in der Nähe ihres offenen Endes (10) radiale Vorsprünge (32) zum Zurückhalten des gleitenden Ringes (18) aufweist.

6. Schnellanschluß nach einem der vorhergehenden Ansprüche, dadurch gekennzeichnet, daß das Führungs- und Verriegelungsorgan (18, 38) in Drehrichtung fest mit der Hülse (8, 40) durch Riffeln (20, 22) verbunden ist.

7. Schnellanschluß nach einem der vorhergehenden Ansprüche, dadurch gekennzeichnet, daß das Führungs- und Verriegelungsorgan (18) ein gleitend auf der Hülse (8) montierter Ring ist.

8. Schnellanschluß nach Anspruch 7, dadurch gekennzeichnet, daß der Ring (18) gegen das offene Ende der Hülse (8) durch eine Feder (24) zurückgedrückt wird, die aus einer flachen, spiralig gewickelten Lamelle hergestellt ist.

9. Schnellanschluß nach einem der Ansprüche 1 bis 6, dadurch gekennzeichnet, daß das Führungs- und Verriegelungsorgan (38) ein gleitend im Inneren der Hülse (40) montierter und elastisch nach außen hin zurückgedrückter Ring ist.

**Claims**

1. Quick-release fastener of the bayonet type, for the connection of two members, comprising these two members, one of which terminates in a socket (8; 40) having at least one helical slot (12), whereas the other comprises a stem (4) carrying at least one laterally projecting pin (6), which is able to be housed in the slot in the socket, characterised in that the socket (8; 40) supports a guiding and locking member (18; 38) prevented from rotating and able to move axially and elastically relative to the latter, for elastically biasing the pin (6) in the base of the helical slot (12) and locking it in this position.

2. Quick-release fastener according to Claim 1, characterised in that the guiding and locking member is constituted by a ring (18, 38) sliding axially along the socket (8, 40) and biased towards the open end (10) of the latter by a spring (24), which comprises, in facing relationship to each helical slot (12), an open longitudinal slot (28) which is laterally offset with respect to the entrance of the helical slot so that the pin (6) of the stem (4) must push it back in order to penetrate the slot (12), but is then trapped by the edges of the two slots.

3. Quick-release fastener according to Claim 2, characterised in that each longitudinal slot (28) of the sliding ring is flared in the direction of its entrance end.

4. Quick-release fastener according to one of Claims 2 and 3, characterised in that the edges of the slot (28) and of the sliding ring (18, 38) partly close the entrance (14) of the slot (12) of the socket.

5. Quick-release fastener according to one of the preceding Claims, characterised in that the socket comprises, in the vicinity of its open end (10), radial lugs (32) for retaining the sliding ring (18).

6. Quick-release fastener according to one of the preceding Claims, characterised in that the guiding and locking member (18, 38) is connected to rotate with the socket (8, 40) by splines (20, 22).

7. Quick-release fastener according to one of the preceding Claims, characterised in that the guiding and locking member (18) is a ring mounted to slide on the socket (8).

8. Quick-release fastener according to Claim 7, characterised in that the ring (18) is biased towards the open end of the socket (8) by a spring (24) formed by a flat strip wound helically.

9. Quick-release fastener according to one of Claims 1 to 6, characterised in that the guiding and locking member (38) is a ring mounted to slide inside the socket (40) and biased elastically towards the outside.

FIG.1

FIG.2

FIG.3